# EUROPÄISCHE PATENTSCHRIFT

(11) **EP 0 960 424 B1**
(45) Veröffentlichungstag und Bekanntmachung des Hinweises auf die Patenterteilung: **04.06.2003**
(21) Anmeldenummer: 98905306.1
(22) Anmeldetag: 17.01.1998
(51) Int. Cl.: G12B 11/02

(54) **ZIFFERBLATT**
DIAL PLATE
PLAQUE-CADRAN

(30) Priorität: 13.02.1997 DE 19705536
(43) Veröffentlichungstag der Anmeldung: 01.12.1999
(73) Patentinhaber: Siemens Aktiengesellschaft, 80333 München (DE)
(72) Erfinder: WEDEL, Hans, Kurt, D-64367 Mühltal (DE); KABOTH, Franz-Josef, D-61276 Weilrod (DE); BACH, Kurt, D-63505 Langenselbold (DE); HABENEY, Andreas, D-65779 Kelkheim (DE); HERZOG, Michael, D-64297 Darmstadt (DE); RIETZLER, Klaus, D-59192 Bergkamen (DE); BROSDA, Detlev, D-64823 Gro umstadt (DE)
(86) Internationale Anmeldenummer: EP9800237
(87) Internationale Veröffentlichungsnummer: WO98036420

(56) Entgegenhaltungen:
- EP-A- 0 707 197
- DE-A- 3 828 373
- GB-A- 2 014 313

## Beschreibung

Die Erfindung bezieht sich auf ein Zifferblatt, insbesondere für eine Anzeige in einem Kraftfahrzeug, mit einem flächigen Träger, auf dem zur Darstellung einer Skala und/oder von Zeichen und/oder Symbolen sowie zur Abdeckung der Bereiche außerhalb der Konturen der Skala, der Zeichen oder Symbole Farben aufgebracht sind.

Bei derartigen Zifferblättern, wie z.B. in der GB-A-2 014 313 erwähnt, ist es zur Erzeugung farbiger Darstellungen bekannt, den Träger an den Stellen einer Skala, von Zeichen und von Symbolen, die in einer bestimmten Farbe wahrnehmbar sein sollen, jeweils diese bestimmte Farbe aufzutragen. Dieser Farbauftrag erfolgt mittels Siebdruck und erfordert es, daß eine Farbe mit exakt der gewünschten Färbung verwendet wird. Da Zifferblätter für eine Anzeige in einem Kraftfahrzeug meist mit einer Mehrzahl von Farbaufdrucken versehen werden, müssen diese verschiedenen Farben in'der jeweils gewünschten Färbung zur Verfügung stehen. Die Farbtöne der zu verwendenden Farben bei unterschiedlichen Anzeigen sind meist nicht gleich, so daß eine Lagerhaltung mit einer Vielzahl an Farben erforderlich ist und bei einem Wechsel der zu bedruckenden Zifferblätter ein großer Umrüstaufwand entsteht.

Aufgabe der Erfindung ist es daher, ein Zifferblatt der eingangs genannten Art zu schaffen, das auf einfache Weise mit den unterschiedlichsten Farbtönen herstellbar ist.

Diese Aufgabe wird gelöst durch ein Zifferblatt, insbesondere für eine Anzeige in einem Kraftfahrzeug, mit einem flächigen Träger, auf dem zur Darstellung einer Skala und/oder von Zeichen und/oder Symbolen sowie zur Abdeckung der Bereiche außerhalb der Konturen der Skala, der Zeichen oder Symbole Farben aufgebracht sind, wobei die Farben der Skala und/oder der Zeichen und/oder der Symbole aus einem aus mehreren sich ganz oder teilweise überdeckenden transparenten Farbschichten unterschiedlicher Färbung gebildeten Schichtensystem bestehen. Durch diese Ausbildung kann mit wenigen Grundfarben durch entsprechendes Übereinanderdrucken jede beliebige Farbtönung erreicht werden. Somit brauchen für die verschiedensten Farbtöne nur die Grundfarben zur Verfügung stehen, so daß die Lagerhaltung der Farben gering gehalten werden kann. Ein Umrüsten auf andere zu erzeugende Farbtöne bei den unterschiedlichsten Zifferblättern entfällt.

Der flächige Träger kann sowohl lichtundurchlässig mit vorzugsweise weißer Färbung als auch transparent oder durchscheinend sowie von seiner einem Beobachter abgewandten Seite her von einer Lichtquelle durchleuchtbar sein. Das dabei am Träger reflektierte Auflicht bzw. das durch den Träger hindurchtretende Durchlicht durchstrahlt die einander überdeckenden transparenten Farbschichten und erzeugt so durch Mischung die jeweils gewünschte Farbtönung.

Eine besonders feine Struktur, die auch besonders gut gleitende Farbübergänge ermöglicht, wird dadurch erreicht, daß die transparenten Farbschichten des Schichtensystems in einem Punktraster auf den Träger aufgebracht sind, wobei die Punkte des Punktrasters etwa zwischen 400 und 3000 Punkte pro Inch (entsprechend etwa zwischen 15,75 und 118,11 Punkte pro mm), insbesondere etwa 800 Punkte pro Inch (entsprechend etwa 31,50 Punkte pro mm), sein können. Dies ergibt eine derart feine Auflösung des Punktrasters, daß es von dem menschlichen Auge nicht mehr als Raster, sondern als homogene Farbe erfaßt wird.

Die Punkte des Punkterasters können gleiche oder aber auch unterschiedliche Größe besitzen.

Alternativ zu im Punktraster aufgetragenen transparenten Farbschichten können diese transparenten Farbschichten auch als flächige Farbfelder auf den Träger aufgebracht sein, wobei vorzugsweise die flächigen Farbfelder den Flächen der Skala und/oder der Zeichen und/oder der Symbole entsprechen.

Sind die transparenten Farbschichten des Schichtensystems beobachterseitig von einer transflektiven Farbschicht bedeckt, so ist bei Auflicht von vorne die Farbe der transflektiven Farbschicht und bei Durchlicht von der Rückseite des Zifferblatts die Farbe der transparenten Farbschichten bzw. eine Mischfarbe aus den transparenten Farbschichten und der transflektiven Farbschicht sichtbar.

Vorzugsweise ist dabei die transflektive Farbschicht weiß.

Ist die transflektive Farbschicht in Teilen der Skala und/oder der Zeichen und/oder der Symbole ausgespart und im Bereich der Aussparung sich ganz oder teilweise überdeckend ein weiteres Schichtensystem bildende transparente Farbschichten auf den Träger aufgebracht, so ist bei Auflicht der Bereich der Aussparung in einer anderen Farbe zu sehen als der von der transparenten Farbschicht bedeckte Teil. Dies ermöglicht es z.B. einen bestimmten Teil, wie z.B. den Endbereich einer Skala, beispielsweise in roter Signalfarbe darzustellen, während der andere Teil der Skala weiß erscheint.

Um die ungleichmäßige Lichtintensitätsverteilung der das Zifferblatt von der Rückseite her beleuchtenden Lichtquelle zu vergleichmäßigen, kann den Träger ganz oder teilweise überdeckend auf der dem Beobachter abgewandten Seite des ersten und/oder des weiteren Schichtensystems ein der Lichtintensitätsverteilung der Lichtquelle entsprechender Vergleichmäßigungsdruck aufgebracht sein.

Besteht dabei der Vergleichmäßigungsdruck aus sich ganz oder teilweise überdeckenden Farbschichten, die in einem Punktraster oder als Farbflächen variabler Dichte aufgetragen sind, so ist durch die feine Struktur des Vergleichmäßigungsdrucks auch ein den feinsten Lichtintensitätsunterschieden angepaßter fließende Übergänge aufweisender Vergleichmäßigungsdruck erzeugbar.

Das erste Schichtensystem und/oder die transflektive Schicht und/oder das weitere Schichtensystem und/oder der Vergleichmäßigungsdruck können auf der dem Beobachter zugewandten oder auf der dem Beobachter abgewandten Seite auf den Träger aufgebracht sein. Sind alle Schichten auf der selben Seite auf den Träger aufgebracht, so vereinfacht dies den Druckvorgang dieser Schichten.

Der flächige Träger kann eine Folie, insbesondere eine aus Polycarbonat bestehende Folie sein.

Um die Haftsicherheit der Farbbeschichtung auf dem Träger, insbesondere auf dem als Folie ausgebildeten Träger zu erhöhen, kann auf der eine Farbbeschichtung tragenden Seite des Trägers zwischen Träger und Farbbeschichtung eine Haftvermittlerschicht angeordnet sein.

Die die Bereiche außerhalb der Konturen der Skala, der Zeichen oder Symbole abdeckende Farbe kann eine zumindest weitgehend lichtundurchlässige, insbesondere schwarze Farbe sein. Dies erhöht den Kontrast zwischen dem Feld der Anzeige und der Skala, den Zeichen oder Symbolen und verbessert damit die gute Ablesbarkeit.

Jede der transparenten Farbschichten des ersten und/oder des weiteren Schichtensystems kann in einem separaten Druckvorgang auf den Träger aufgebracht sein.

Ist das erste und/oder das weitere Schichtensystem als separat erzeugtes Schichtensystem auf den Träger aufgebracht, so können diese Schichtensysteme mit sehr hoher Maßgenauigkeit hergestellt werden und vermeiden Passerprobleme beim Bedrucken des Trägers.

Das erste Schichtensystem und/oder die transflektive Schicht und/oder das weitere Schichtensystem und/oder der Vergleichmäßigungsdruck und/oder die lichtundurchlässige Farbe kann in separaten Druckvorgängen auf den Träger aufgebracht sein.

Eine Vereinfachung des Druckvorganges und Erhöhung der Maßgenauigkeit der einzelnen Schichten zueinander wird erreicht, wenn das erste Schichtensystem und/oder die transflektive Schicht und/oder das weitere Schichtensystem und/oder der Vergleichmäßigungsdruck und/oder die lichtundurchlässige Farbe als separat erzeugtes Schichtensystem auf den Träger aufgebracht sind.

Ausführungsbeispiele der Erfindung sind in der Zeichnung dargestellt und werden im folgenden näher beschrieben. Es zeigen:
- Figur 1: eine Ansicht eines Zifferblatts,
- Figur 2: ein erstes Ausführungsbeispiel eines Querschnitts eines Bereichs eines Zifferblatts,
- Figur 3: ein zweites Ausführungsbeispiel eines Querschnitts eines Bereichs eines Zifferblatts,
- Figur 4: ein drittes Ausführungsbeispiel eines Querschnitts eines Bereichs eines Zifferblatts,
- Figur 5: ein viertes Ausführungsbeispiel eines Querschnitts eines Bereichs eines Zifferblatts.

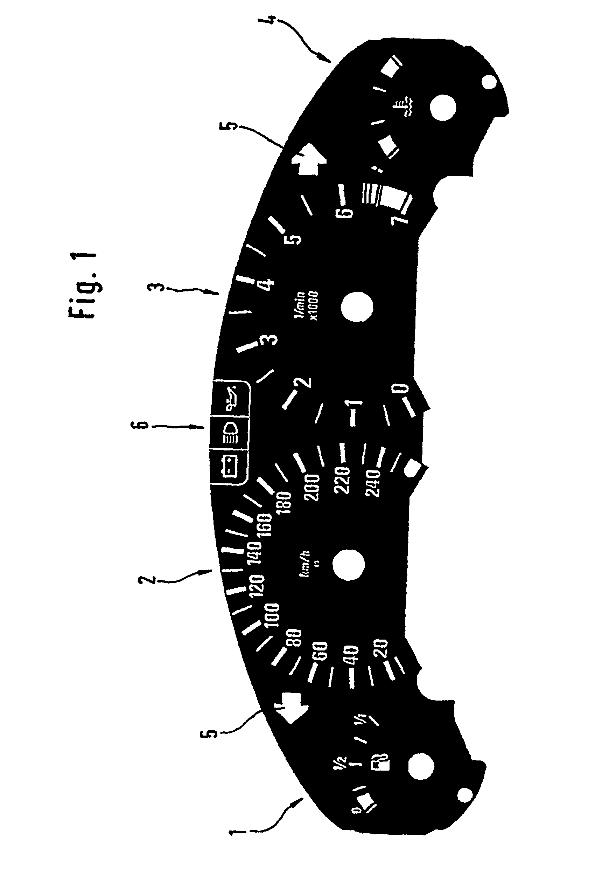

Das in Figur 1 dargestellte Zifferblatt ist ein Zifferblatt für eine Anzeige in einem Kraftfahrzeug und weist eine Skala 1 mit Symbol für den Tankfüllstand des Kraftstoffs, eine Skala 2 für die Geschwindigkeit, eine Skala 3 für die Motordrehzahl pro Minute sowie eine Skala 4 mit Symbol für den Waschwasserfüllstand auf. Weiterhin sind zwei Fahrtrichtungspfeile 5 und eine Symbolleiste 6 mit Warnfeldern für Batterie, Fernlicht und Ölstand vorhanden.

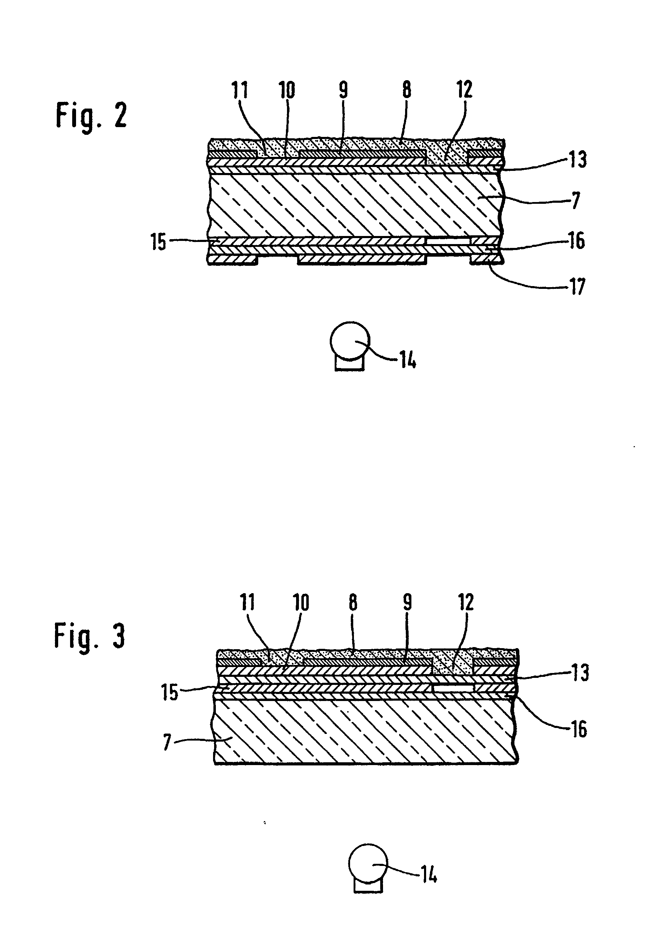

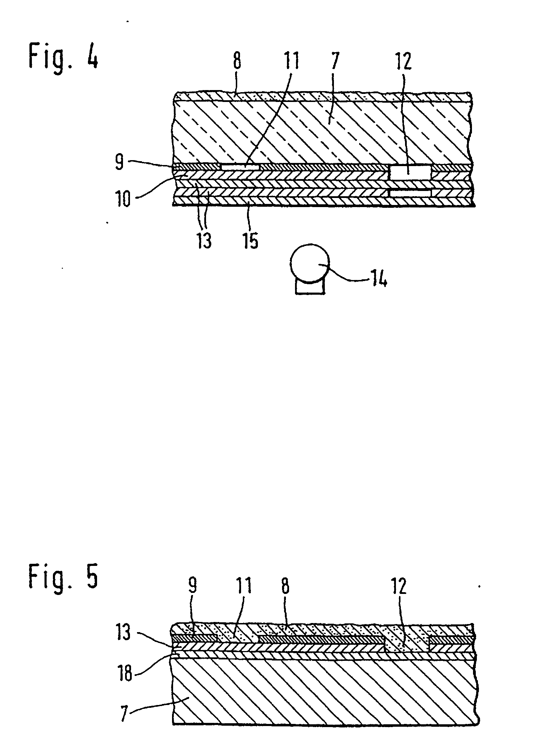

Die in den Figuren 2 bis 5 dargestellten Ausführungsbeispiele des Querschnittaufbaus von Zifferblättern weisen einen flächigen Träger 7 auf, der aus einer Folie aus Polycarbonat besteht und in den Figuren 2 bis 4 transparent ist. In Figur 5 ist der Träger lichtundurchlässig schwarz ausgebildet. Es versteht sich, daß die Träger insbesondere der Figuren 3 und 5 auch aus einem anderen Material, wie z.B. Papier oder Karton, bestehen können und dabei entweder lichtdurchscheinend oder nicht lichtdurchscheinend ausgebildet sind.

In den Figuren 2 bis 5 sind von der Seite eines Beobachters der Anzeige aus gesehen zuerst eine transparente Entspiegelungsschicht 8 mit unregelmäßig strukturierter Oberfläche und eine lichtundurchlässige schwarze Farbschicht 9, die mit Ausnahme der Skalen und Symbole die gesamte Fläche des Trägers 7 bedeckt, angeordnet. Besitzt die dem Beobachter zugewandte Fläche des Trägers eine unregelmäßig strukturierte Oberfläche, so kann auf die Entspiegelungsschicht 8 verzichtet werden.

Die Farbschicht 9 könnte auch in geringem Maß lichtdurchscheinend sein. Es muß nur ein ausreichender Kontrast zu den Skalen und Symbolen vorhanden sind.

In den Figuren 2 bis 4 ist zumindest in Bereichen der Skalen und Symbole eine weitere Farbschicht 10 angeordnet, die transflektiv und vorzugsweise weiß ist.

In weiteren Bereichen 12 der Skalen und Symbole in den Figuren 2 bis 4 ist ein aus mehreren sich ganz oder teilweise überdeckenden transparenten Farbschichten gebildetes Schichtensystem 13 angeordnet, so daß bei Beleuchtung von der Beobachterseite her (Tageslicht, Auflichtbeleuchtung) der Bereich 11 der Skalen und Symbole in weißer Farbe und der Bereich 12 der Skalen und Symbole in der Mischfarbe des Schichtensystems 13 (z.B. rot) zu sehen ist.

Die Ausführungsbeispiele der Figuren 2 und 4 zeigen Anzeigen, die für den Nachtbetrieb von einer auf der dem Beobachter abgewandten Seite angeordneten Lichtquelle 14 her beleuchtbar sind.

Um bei Betrieb der Lichtquelle 14 die Bereiche 11 der Skalen und Symbole in einer anderen Farbe, z.B. grün, erscheinen zu lassen als bei nicht aktivierter Lichtquelle 14 ist in den Bereichen 11 hinter dem ersten Schichtensystem 13 ein weiteres aus mehreren sich ganz oder teilweise überdeckenden transparenten Farbschichten gebildetes Schichtensystem 15 angeordnet. Zwischen diesem Schichtensystem 15 und der Lichtquelle 14 befindet sich ein Vergleichmäßigungsdruck 16, dessen Lichtdurchlässigkeit z.B. umgekehrt proportional zu der Lichtintensitätsverteilung der Lichtquelle 14 ist, so daß über die Fläche des Zifferblatts hinweg Licht mit gleicher Intensität durch den Vergleichmäßigungsdruck 16 hindurchtritt.

Darüber hinaus ist in Figur 2 der Vergleichmäßigungsdruck 16 in den der zumindest weitgehend lichtundurchlässigen Farbschicht 9 gegenüberliegenden Bereichen mit einer Reflexionsschicht 17 versehen, durch die das an den Bereichen 11 und 12 nicht zur Beobachterseite austretende im Träger 7 vorhandene Streulicht so lange immer wieder zur Beobachterseite reflektiert wird, bis es an den Bereichen 11 oder 12 zur Beobachterseite hin austritt. Ein Lichtverlust innerhalb des Zifferblatts wird somit weitgehend vermieden.

Figur 5 zeigt ein Zifferblatt für eine Anzeige, die durch Auflicht von der Seite des Beobachters her beleuchtet wird. Dies kann durch das Umgebungslicht oder durch eine vor der Anzeige angeordnete Lichtquelle erfolgen.

Im Bereich 11 der Skalen und Symbole ist hinter der lichtundurchlässigen Farbschicht 9 ein Schichtensystem 13 aus mehreren sich ganz oder teilweise überdeckenden transparenten Farbschichten angeordnet, dessen Mischfarbe für den Beobachter sichtbar ist. Hinter dem Schichtensystem 13 befindet sich auf dem Träger 7 eine Reflexionsschicht 18, die auch hinter dem Bereich 12 der Skalen und Symbole angeordnet ist.

Das von der Beobachterseite her auf das Zifferblatt auftreffende Licht tritt in den Bereichen 11 und 12 bis zur Reflexionsschicht 18 hindurch und wird dort zur Beobachterseite hin reflektiert. Da das Licht im Bereich 11 durch das transparente Schichtensystem 13 hindurchtreten muß, erscheint dieser Bereich in der Mischfarbe des Schichtensystems 13 mit dem reflektierten Licht. Der Bereich 12 dagegen erscheint in der Farbe, in der das Licht von der Reflexionsschicht reflektiert wird.

Sowohl die Schichtensysteme 13 und 15 als auch die weiteren Farbschichten 9 und 10 sowie der Vergleichmäßigungsdruck 16 und gegebenenfalls auch die Reflexionsschichten 17 und 18 sind aus mehreren sich ganz oder teilweise überdeckenden transparenten Farbschichten jeweils gleicher oder unterschiedlicher Färbung gebildet und in einem Punktraster oder als flächige Farbfelder auf den Träger 7 aufgetragen. Die Farben dieser Schichten werden auf einfache Weise durch die Verwendung der Grundfarben Gelb, Margenta, Cyan und Schwarz sowie Weiß erzeugt, wobei die jeweilige Mischfarbe der Grundfarben bei Lichtdurchtritt durch das Schichtensystem die durch den Beobachter sichtbare Farbe ergibt. Damit kann durch diese Grundfarben jede beliebige Färbung erzeugt werden, ohne daß eine dazu speziell aufbereitete Farbe hergestellt werden muß. Zu diesen Grundfarben kommt zur Darstellung der weißen Flächen noch die Farbe Weiß hinzu. Natürlich ist es nicht ausgeschlossen, daß zusätzlich eine weitere bereits vorab gemischte Farbe zur Anwendung gelangt.

Um auf einfache Weise mit hoher Präzision und mit geringem Zeitaufwand das Zifferblatt drucken zu können, kann dazu ein digitales Druckverfahren angewandt werden.

## Patentansprüche

1. Zifferblatt, insbesondere für eine Anzeige in einem Kraftfahrzeug, mit einem flächigen Träger, auf dem zur Darstellung einer Skala und/oder von Zeichen und/oder Symbolen sowie zur Abdeckung der Bereiche außerhalb der Konturen der Skala, der Zeichen oder Symbole Farben aufgebracht sind, **dadurch gekennzeichnet, daß** die Farben der Skala (1 - 4) und/oder der Zeichen und/oder der Symbole aus einem aus mehreren sich ganz oder teilweise überdeckenden transparenten Farbschichten unterschiedlicher Färbung gebildeten Schichtensystem (13, 15) bestehen.

2. Zifferblatt nach Anspruch 1, **dadurch gekennzeichnet, daß** der flächige Träger (7) transparent oder durchscheinend sowie von seiner einem Beobachter abgewandten Seite her von einer Lichtquelle (14) durchleuchtbar ist.

3. Zifferblatt nach einem der vorhergehenden Ansprüche, **dadurch gekennzeichnet, daß** die transparenten Farbschichten des Schichtensystems (13, 15) in einem Punktraster auf den Träger aufgebracht sind.

4. Zifferblatt nach Anspruch 3, **dadurch gekennzeichnet, daß** die Punkte des Punktrasters etwa zwischen 400 und 3000 Punkte pro Inch (entsprechend etwa zwischen 15,75 und 118,11 Punkte pro mm) sind.

5. Zifferblatt nach Anspruch 4, **dadurch gekennzeichnet, daß** die Punkte des Punktrasters etwa 800 Punkte pro Inch (entsprechend etwa 31,50 Punkte pro mm) sind.

6. Zifferblatt nach Anspruch 3, **dadurch gekennzeichnet, daß** die Punkte des Punktrasters unterschiedliche Größe besitzen.

7. Zifferblatt nach Anspruch 1, **dadurch gekennzeichnet, daß** die transparenten Farbschichten des Schichtensystems als flächige Farbfelder auf den Träger aufgebracht sind.

8. Zifferblatt nach Anspruch 7, **dadurch gekennzeichnet, daß** die flächigen Farbfelder den Flächen der Skala und/oder der Zeichen und/oder der Symbole entsprechen.

9. Zifferblatt nach einem der vorhergehenden Ansprüche, **dadurch gekennzeichnet, daß** die transparenten Farbschichten des Schichtensystems (13) beobachterseitig von einer transflektiven Farbschicht (10) bedeckt sind.

10. Zifferblatt nach Anspruch 9, **dadurch gekennzeichnet, daß** die transflektive Farbschicht (10) weiß ist.

11. Zifferblatt nach Anspruch 9, **dadurch gekennzeichnet, daß** die transflektive Farbschicht (10) in Teilen der Skala (1- 4) und/oder der Zeichen und/oder der Symbole ausgespart und im Bereich (12) der Aussparung sich ganz oder teilweise überdeckend ein weiteres Schichtensystem (15) bildende transparente Farbschichten auf den Träger (7) aufgebracht sind.

12. Zifferblatt nach Anspruch 1, **dadurch gekennzeichnet, daß** den Träger ganz oder teilweise überdeckend auf der dem Beobachter abgewandten Seite des ersten und/oder des weiteren Schichtensystems (13, 15) ein der Lichtintensitätsverteilung der Lichtquelle (14) entsprechender Vergleichmäßigungsdruck (16) aufgebracht ist.

13. Zifferblatt nach Anspruch 12, **dadurch gekennzeichnet, daß** der Vergleichmäßigungsdruck (16) aus sich ganz oder teilweise überdekkenden Farbschichten besteht, die in einem Punktraster oder als Farbflächen variabler Dichte aufgetragen sind.

14. Zifferblatt nach einem der vorhergehenden Ansprüche, **dadurch gekennzeichnet. daß** das erste Schichtensystem (13) und/oder die transflektive Schicht (10) und/oder das weitere Schichtensystem (15) und/oder der Vergleichmäßigungsdruck (16) auf der dem Beobachter zugewandten oder auf der dem Beobachter abgewandten Seite auf den Träger (7) aufgebracht sind.

15. Zifferblatt nach einem der vorhergehenden Ansprüche, **dadurch gekennzeichnet, daß** der Träger (7) eine Folie ist.

16. Zifferblatt nach Anspruch 15, **dadurch gekennzeichnet, daß** der Träger (7) aus Polycarbonat besteht.

17. Zifferblatt nach einem der vorhergehenden Ansprüche, **dadurch gekennzeichnet, daß** auf der eine Farbbeschichtung tragenden Seite des Trägers (7) zwischen Träger (7) und Farbbeschichtung eine Haftvermittlerschicht angeordnet ist.

18. Zifferblatt nach einem der vorhergehenden Ansprüche, **dadurch gekennzeichnet, daß** die die Bereiche außerhalb der Konturen der Skala (1 - 4), der Zeichen oder Symbole abdeckende Farbe (9) eine zumindest weitgehend lichtundurchlässige Farbe ist.

19. Zifferblatt nach Anspruch 18, **dadurch gekennzeichnet, daß** die lichtundurchlässige Farbe (9) schwarz ist.

20. Zifferblatt nach einem der vorhergehenden Ansprüche, **dadurch gekennzeichnet, daß** jede der transparenten Farbschichten des ersten und/oder des weiteren Schichtensystems (13, 15) in einem separaten Druckvorgang auf den Träger (7) aufgebracht ist.

21. Zifferblatt nach einem der Ansprüche 1 bis 19, **dadurch gekennzeichnet, daß** das erste und/oder das weitere Schichtensystem (13, 15) als separat erzeugtes Schichtensystem auf den Träger (7) aufgebracht ist.

22. Zifferblatt nach einem der vorhergehenden Ansprüche, **dadurch gekennzeichnet, daß** das erste Schichtensystem (13) und/oder die transflektive Schicht (10) und/oder das weitere Schichtensystem (15) und/oder der Vergleichmäßigungsdruck (16) und/oder die lichtundurchlässige Farbe (9) in separaten Druckvorgängen auf den Träger (7) aufgebracht sind.

23. Zifferblatt nach einem der Ansprüche 1 bis 19, **dadurch gekennzeichnet, daß** das erste Schichtensystem (13) und/oder die transflektive Schicht (10) und/oder das weitere Schichtensystem (15) und/oder der Vergleichmäßigungsdruck (16) und/oder die lichtundurchlässige Farbe (9) als separat erzeugtes Schichtensystem auf den Träger (7) aufgebracht sind.

## Claims

1. Instrument panel, in particular for a display in a motor vehicle, with a sheet-like carrier on which colours have been applied for representing a scale and/or characters and/or symbols as well as for covering the regions outside the contours of the scale, characters or symbols, **characterized in that** the colours of the scale (1 - 4) and/or the characters and/or the symbols comprise a system of layers (13, 15) formed by a plurality of transparent colour layers of different coloration fully or partially covering over one another.

2. Instrument panel according to Claim 1, **characterized in that** the sheet-like carrier (7) is transparent or translucent as well as able to be transilluminated by a light source (14) from its side facing away from the observer.

3. Instrument panel according to one of the preceding claims, **characterized in that** the transparent colour layers of the system of layers (13, 15) are applied to the carrier in a grid of points.

4. Instrument panel according to Claim 3, **characterized in that** the points of the grid of points are approximately between 400 and 3000 points per inch (corresponding to approximately between 15.75 and 118.11 points per mm).

5. Instrument panel according to Claim 4, **characterized in that** the points of the grid of points are approximately 800 points per inch (corresponding to approximately 31.50 points per mm).

6. Instrument panel according to Claim 3, **characterized in that** the points of the grid of points have different sizes.

7. Instrument panel according to Claim 1, **characterized in that** the transparent colour layers of the system of layers are applied to the carrier as sheet-like areas of colour.

8. Instrument panel according to Claim 7, **characterized in that** the sheet-like areas of colour correspond to the areas of the scale and/or the characters and/or the symbols.

9. Instrument panel according to one of the preceding claims, **characterized in that** the transparent colour layers of the system of layers (13) are covered on the observer side by a transflective colour layer (10).

10. Instrument panel according to Claim 9, **characterized in that** the transflective colour layer (10) is white.

11. Instrument panel according to Claim 9, **characterized in that** the transflective colour layer (10) is cut away in parts of the scale (1 - 4) and/or the characters and/or the symbols and transparent colour layers fully or partially covering over one another, forming a further system of layers (15), are applied to the carrier (7) in the region (12) of the cutaway.

12. Instrument panel according to Claim 1, **characterized in that** an evening-out print (16) corresponding to the light-intensity distribution of the light source (14) may be applied, fully or partially covering over the carrier, on the side of the first and/or further system of layers (13, 15) facing away from the observer.

13. Instrument panel according to Claim 12, **characterized in that** the evening-out print (16) comprises colour layers which fully or partially cover over one another and are applied in a grid of points or as areas of colour of variable density.

14. Instrument panel according to one of the preceding claims, **characterized in that** the first system of layers (13) and/or the transflective layer (10) and/or the further system of layers (15) and/or the evening-out print (16) are applied to the carrier (7) on the side facing the observer or on the side facing away from the observer.

15. Instrument panel according to one of the preceding claims, **characterized in that** the carrier (7) is a sheeting.

16. Instrument panel according to Claim 15, **characterized in that** the carrier (7) consists of polycarbonate.

17. Instrument panel according to one of the preceding claims, **characterized in that** an adhesion-promoter layer is arranged on the side of the carrier (7) bearing a colour coating, between the carrier (7) and the colour coating.

18. Instrument panel according to one of the preceding claims, **characterized in that** the colour (9) covering the regions outside the contours of the scale (1 - 4), the characters or symbols is an at least largely opaque colour.

19. Instrument panel according to Claim 18, **characterized in that** the opaque colour (9) is black.

20. Instrument panel according to one of the preceding claims, **characterized in that** each of the transparent colour layers of the first and/or further system of layers (13, 15) is applied to the carrier (7) in a separate printing operation.

21. Instrument panel according to one of Claims 1 to 19, **characterized in that** the first and/or further system of layers (13, 15) is applied to the carrier (7) as a separately created system of layers.

22. Instrument panel according to one of the preceding claims, **characterized in that** the first system of layers (13) and/or the transflective layer (10) and/or the further system of layers (15) and/or the evening-out print (16) and/or the opaque colour (9) are applied to the carrier (7) in separate printing operations.

23. Instrument panel according to one of Claims 1 to 19, **characterized in that** the first system of layers (13) and/or the transflective layer (10) and/or the further system of layers (15) and/or the evening-out print (16) and/or the opaque colour (9) are applied to the carrier (7) as a separately created system of layers.

## Revendications

1. Cadran, en particulier pour un affichage dans un véhicule à moteur, comprenant un support plan sur lequel des couleurs sont appliquées afin de réaliser une échelle et/ou des signes et/ou des symboles ainsi que pour recouvrir des zones à l'extérieur des contours des échelles, des signes ou des symboles, **caractérisé en ce que** les couleurs de l'échelle (1-4) et/ou des signes et/ou des symboles consistent en un système de couches (13, 15) formé par plusieurs couches de couleur transparentes se recouvrant totalement ou partiellement.

2. Cadran selon la revendication 1, **caractérisé en ce que** le support bidimensionnel (7) est transparent ou translucide et peut être illuminé par transparence par une source de lumière placée sur le côté opposé par rapport à l'observateur.

3. Cadran selon l'une des revendications précédentes, **caractérisé en ce que** les couches de couleur transparentes du système des couches (13, 15) sont appliquées au support sous forme de trame à points.

4. Cadran selon la revendication 3, **caractérisé en ce que** les points de la trame à points sont présents à raison d'environ entre 400 et 3000 points par pouce (correspondant à environ 15,75 à 118,11 points par mm).

5. Cadran selon la revendication 4, **caractérisé en ce que** les points de la trame à points sont présents à raison d'environ 800 points par pouce (correspondant à environ 31,50 points par mm).

6. Cadran selon la revendication 3, **caractérisé en ce que** les points de la trame à points ont des grandeurs différentes.

7. Cadran selon la revendication 1, **caractérisé en ce que** les couches de couleur transparentes du système des couches sont appliquées sous forme de champs plans colorés.

8. Cadran selon la revendication 7, **caractérisé en ce que** les champs plans colorés correspondent aux surfaces de l'échelle et/ou des signes et/ou des symboles.

9. Cadran selon une quelconque des revendications précédentes, **caractérisé en ce que** les couches de couleur transparentes du système des couches (13) sont couvertes du côté de l'observateur par une couche transflective de couleur (10).

10. Cadran selon la revendication 9, **caractérisé en ce que** la couche transflective de couleur (10) est blanche.

11. Cadran selon la revendication 9, **caractérisé en ce que** la couche transflective de couleur (10) contient des réserves sur des parties de l'échelle (1-4) et/ou des signes et/ou des symboles, et que des couches de couleur transparentes, formant un système additionnel de couches (15), sont appliquées sur le support (7) dans la zone des réserves.

12. Cadran selon la revendication 1, **caractérisé en ce qu'**une impression d'égalisation (16), correspondant à la distribution de l'intensité lumineuse de la source de lumière (14), est appliquée sur le support dans les zones du premier système et/ou du système additionnel des couches (13, 15) du côté opposé par rapport à l'observateur, cette impression recouvrant le support totalement ou partiellement.

13. Cadran selon la revendication 12, caractérisé en ce l'impression d'égalisation (16) est composée de couches de couleur se recouvrant totalement ou partiellement, appliquées selon une trame à points ou en forme de surfaces de couleur ayant des épaisseurs variables.

14. Cadran selon l'une quelconque des revendications précédentes, **caractérisé en ce que** le premier système de couches (13) et/ou la couche transflective (10) et/ou le système de couches additionnel (15) et/ou l'impression d'égalisation (16) sont appliqués sur le support (7) du côte de l'observateur ou du côté opposé.

15. Cadran selon la revendication 15, **caractérisé en ce que** le support (7) est une pellicule.

16. Cadran selon la revendication 15, **caractérisé en ce que** le support (7) est en polycarbonate.

17. Cadran selon l'une quelconque des revendications précédentes, **caractérisé en ce qu'**une couche d'agent adhésif est disposée entre le support (7) et l'ensemble de couches de couleur sur le côté du support (7) comportant un ensemble de couches de couleur.

18. Cadran selon l'une quelconque des revendications précédentes, **caractérisé en ce que** la couleur (9) recouvrant les zones à l'extérieur des contours de l'échelle (1-4), des signes ou des symboles est une couleur au moins largement opaque.

19. Cadran selon la revendication 18, **caractérisé en ce que** la couleur opaque (9) est noire.

20. Cadran selon l'une quelconque des revendications précédentes, **caractérisé en ce que** chacune des couches de couleur transparentes du premier système de couches et/ ou du système additionnel de couches (13, 15) est appliquée au support (7) par une opération d'impression séparée.

21. Cadran selon l'une des revendications 1 à 19, **caractérisé en ce que** le premier système de couches et/ou le système additionnel de couches (13, 15) sont appliqués au support (7) sous forme de systèmes de couches préparés séparément.

22. Cadran selon l'une quelconque des revendications précédentes, **caractérisé en ce que** le premier système de couches (13) et/ou la couche transflective (10) et/ou le système de couches additionnel (15) et/ou l'impression d'égalisation (16) et/ou la couleur opaque (9) sont appliqués sur le support (7) au cours d'opérations d'impressions séparées.

23. Cadran selon l'une des revendications 1 à 19, **caractérisé en ce que** le premier système de couches (13) et/ou la couche transflective (10) et/ou le système de couches additionnel (15) et/ou l'impression d'égalisation (16) et/ou la couleur opaque (9) sont appliqués sur le support (7) sous forme de systèmes de couches préparés séparément.
